Europäisches Patentamt

European Patent Office

Office européen des brevets

(19)

(11) Numéro de publication : **0 497 665 B1**

(12) **FASCICULE DE BREVET EUROPEEN**

(45) Date de publication du fascicule du brevet :
**21.12.94 Bulletin 94/51**

(21) Numéro de dépôt : **92400184.5**

(22) Date de dépôt : **24.01.92**

(51) Int. Cl.⁵ : **G01V 3/08**

(54) Procédé et dispositif de réduction des effets des bruits parasites sur la détection d'une cible par un système comprenant une pluralité de capteurs élémentaires.

(30) Priorité : **31.01.91 FR 9101092**

(43) Date de publication de la demande :
**05.08.92 Bulletin 92/32**

(45) Mention de la délivrance du brevet :
**21.12.94 Bulletin 94/51**

(84) Etats contractants désignés :
**DE FR GB IT MC NL SE**

(56) Documents cités :
**US-A- 3 490 032**
**US-A- 3 808 519**
**US-A- 4 277 771**
**US-A- 4 766 385**

(56) Documents cités :
**IEEE TRANSACTIONS ON AEROSPACE AND ELECTRONIC SYSTEMS, vol. AES13, no. 3, mai 1977, New York, US, pages 246-254; A.D. McAULAY: "Computerized Model Demonstrating Magnetic Submarine Localization"**

(73) Titulaire : **SEXTANT AVIONIQUE S.A.**
**5/7 rue Jeanne Braconnier**
**Parc Tertiaire**
**F-92366 Meudon la Forêt Cédex (FR)**

(72) Inventeur : **Gouhier-Beraud, Patrick**
**17 rue du 8 mai**
**F-26000 Valence (FR)**

(74) Mandataire : **Bloch, Gérard et al**
**2, square de l'Avenue du Bois**
**F-75116 Paris (FR)**

## Description

La présente invention a tout d'abord pour objet un procédé de réduction des effets des bruits parasites sur la détection d'une cible par un système comprenant une pluralité de capteurs élémentaires sensibles à la présence de la cible dans leurs voisinages respectifs et disséminés dans une zone à surveiller.

Elle peut s'appliquer notamment à la détection de la présence d'un ou plusieurs bâtiments de surface ou de sous-marins dans une zone à surveiller, à l'aide d'une pluralité de bouées reliées, par exemple par liaison radio, à un système central. Chaque bouée est par exemple une bouée magnétométrique comprenant un magnétomètre à résonance magnétique sensible au champ magnétique dans lequel il baigne, et donc aux perturbations du champ magnétique terrestre qui résultent de la présence, au voisinage de la bouée en question, d'un sous-marin. Le système central est disposé soit à bord d'un avion, soit à terre si la zone à surveiller n'est pas trop éloignée de la côte, soit encore sur une bouée "maîtresse" centralisant et traitant les signaux provenant des autres bouées, dites bouées "esclaves".

La zone surveillée peut être une ligne dont on veut savoir si elle est ou non, franchie par un ou plusieurs sous-marins. Dans ce cas, les bouées sont disposées de façon à former un barrage le long de cette ligne. La zone surveillée peut également être une surface, auquel cas les bouées sont disposées en barrage refermé sur lui-même à la périphérie de la surface à surveiller, d'autres bouées étant, le cas échéant, disposées à l'intérieur de la surface.

Dans le cas de bouées magnétométriques et de sous-marins, le problème de la réduction du bruit se pose avec d'autant plus d'accuité que la perturbation apportée au champ magnétique terrestre par un sous-marin est faible et que le signal utile que constitue cette perturbation est susceptible d'être facilement noyé dans des signaux parasites.

On connait déjà un procédé de réduction des effets des bruits parasites dans lequel on retranche, du signal de sortie de chacune des bouées ou capteurs élémentaires, le signal de sortie d'une bouée voisine, après filtrage de ce dernier dans un filtre adaptatif. Le filtre adaptatif est commandé pour que, dans les périodes où il ne se trouve aucun sous-marin dans le voisinage des deux bouées, le résultat de la différence entre le signal de sortie de la bouée et le signal de sortie filtré de la bouée voisine soit aussi faible que possible.

Ce procédé connu souffre cependant de l'inconvénient de réduire de façon insuffisante les effets du bruit, ce qui rend parfois impossible la détection des sous-marins.

La présente invention vise à pallier cet inconvénient.

A cet effet, elle a pour objet un procédé de réduction des effets des bruits parasites sur la détection d'une cible par un système comprenant une pluralité d'au moins trois capteurs élémentaires sensibles à la présence de la cible dans leurs voisinages respectifs et disséminés dans une zone à surveiller, procédé caractérisé par le fait qu'on forme des premières différences des signaux de sortie des capteurs élémentaires pris deux à deux, on retranche de chaque première différence, pour obtenir une deuxième différence, au moins une autre première différence après avoir filtrée celle-ci dans un filtre réglé pour minimiser la valeur de la deuxième différence en l'absence de cible, et on utilise les deuxièmes différences ainsi obtenues pour la détection de la cible.

Dans le procédé de l'invention, la réduction du bruit est obtenue un peu à la manière du procédé de l'art antérieur, par soustraction du signal utile en sortie d'un capteur élémentaire du signal en sortie d'un autre capteur élémentaire, après filtrage de ce dernier. Toutefois, la demanderesse a eu l'idée de travailler sur des différences de signaux de sortie de capteurs élémentaires, au lieu d'utiliser les signaux de sortie eux-mêmes. La demanderesse a en effet constaté que une partie importante du bruit perturbant le signal utile d'un capteur élémentaire était la même pour tous les capteurs élémentaires, surtout lorsque ceux-ci ne sont pas trop éloignés les uns des autres. Or, dans le procédé de l'art antérieur, une partie importante de la fonction du filtrage et de la soustraction du signal filtré est d'éliminer le bruit commun. Il reste cependant, dans ce cas, un bruit résiduel relativement important. Dans le procédé de l'invention, le fait de travailler sur les différences, ou gradients, des signaux de sortie des capteurs élémentaires a pour conséquence un traitement effectué sur des signaux débarrassés de leur partie commune, ce qui a pour conséquence un bruit résiduel beaucoup moins important qui permet une détection plus sûre et une localisation plus précise.

Avantageusement, ledit filtre est un filtre adaptatif dont on commande les coefficients en réponse à la valeur de la deuxième différence établie à l'aide dudit filtre, et on gèle les valeurs desdits coefficients dès que l'on détecte la présence d'une cible en réponse à cette deuxième différence.

Dans ce cas, on tient compte du fait qu'il y a éventuellement une certaine cohérence entre les signaux de sortie des divers capteurs élémentaires en présence de cible, c'est-à-dire qu'il est toujours possible qu'il y ait un peu de signal utile dans les signaux élémentaires qui servent à élaborer les premières différences destinées à être filtrées dans le filtre adaptatif.

Avantageusement encore, lorsque la pluralité de capteurs élémentaires comporte plus de trois capteurs, on forme des paquets de trois capteurs élémentaires voisins les uns des autres, pour chaque paquet, on forme trois premières différences, et on retranche de chacune des trois premières différences ainsi formées une autre des trois premières différences après avoir filtré celle-ci dans un filtre réglé pour minimiser la valeur de la deuxième différence correspondante.

Dans ce cas, l'appareillage utilisé pour la mise en oeuvre du procédé de l'invention est facile à adapter à un changement du nombre de capteurs élémentaires, puisque cet appareillage comporte principalement une pluralité de dispositifs identiques, chacun d'entre eux étant prévu pour traiter les signaux de sortie d'un paquet de trois capteurs élémentaires.

Selon une caractéristique de l'invention, pour éliminer les variations lentes du signal de sortie de chacun des capteurs élémentaires, on calcule une moyenne glissante de ce signal, et on retranche à ce signal la valeur de la moyenne glissante ainsi calculée.

Cette élimination des variations lentes du signal de sortie s'avère utile notamment lorsque les capteurs élémentaires sont des bouées magnétométriques.

Selon une autre caractéristique de l'invention, on décompose le signal de sortie de chacun des capteurs élémentaires, par filtrage fréquentiel, en une pluralité de signaux élémentaires occupant chacun une bande élémentaire de fréquence inférieure à celle dudit signal de sortie, on sous-échantillonne chacun des signaux élémentaires, et on traite séparément les signaux élémentaires sous-échantillonnés occupant une même bande élémentaire de fréquences.

Dans ce cas, et comme cela sera mieux compris dans la suite, il est plus facile de respecter, dans chaque bande élémentaire un compromis satisfaisant pour la fréquence d'échantillonnage.

Selon encore une autre caractéristique de l'invention, pour détecter la cible à partir de chaque deuxième différence, on choisit un ensemble de trajectoires possibles pour la cible relativement au capteur élémentaire correspondant, on projette le signal reçu sur un jeu de fonctions de base lié à chacune de ces trajectoires, on calcule l'énergie projetée pour chacune de ces trajectoires, et on compare chacune de ces énergies projetées à un seuil bas.

La présente invention a également pour objet un dispositif pour la mise en oeuvre du procédé précédent, de réduction des effets des bruits parasites sur la détection d'une cible par un système comprenant une pluralité d'au moins trois capteurs élémentaires sensibles à la présence de la cible dans leurs voisinages respectifs et disséminés dans une zone à surveiller, dispositif caractérisé par le fait qu'il comprend des moyens pour former des premières différences des signaux de sortie des capteurs élémentaires pris deux à deux, des moyens pour retrancher de chaque première différence, pour obtenir une deuxième différence, au moins une autre première différence après filtrage de celle-ci dans un filtre réglé pour minimiser la valeur de la deuxième différence en l'absence de cible, et des moyens de détection de la cible en réponse à ladite deuxième différence.

La présente invention sera mieux comprise à la lecture de la description suivante de plusieurs mises en oeuvre du procédé de l'invention, et de plusieurs dispositifs de l'invention, faite en se référant aux dessins annexés, sur lesquels :

- la fig. 1 représente un schéma par blocs d'un système de détection de sous-marins à l'aide de bouées magnétométriques,
- la fig. 2 représente un schéma plus détaillé d'un des circuits de réduction du bruit et de détection du système de la fig. 1,
- la fig. 3 représente schématiquement un barrage de bouées susceptible d'être utilisé dans un système du type de celui de la figure 1,
- la fig. 4 représente une variante du circuit de réduction de bruit de la fig. 2,
- la fig. 5 représente un schéma d'un des circuits de réception et de filtrage du système de la fig. 1,
- la fig. 6 représente un schéma par blocs d'une variante du système de la fig. 1, mettant en oeuvre un découpage en voies fréquentielles,
- la fig. 7 représente un schéma illustrant les bandes de fréquence des diverses voies fréquentielles mises en oeuvre dans le système de la figure 6, et,
- la fig. 8 représente une bouée magnétométrique en présence d'un sous-marin.

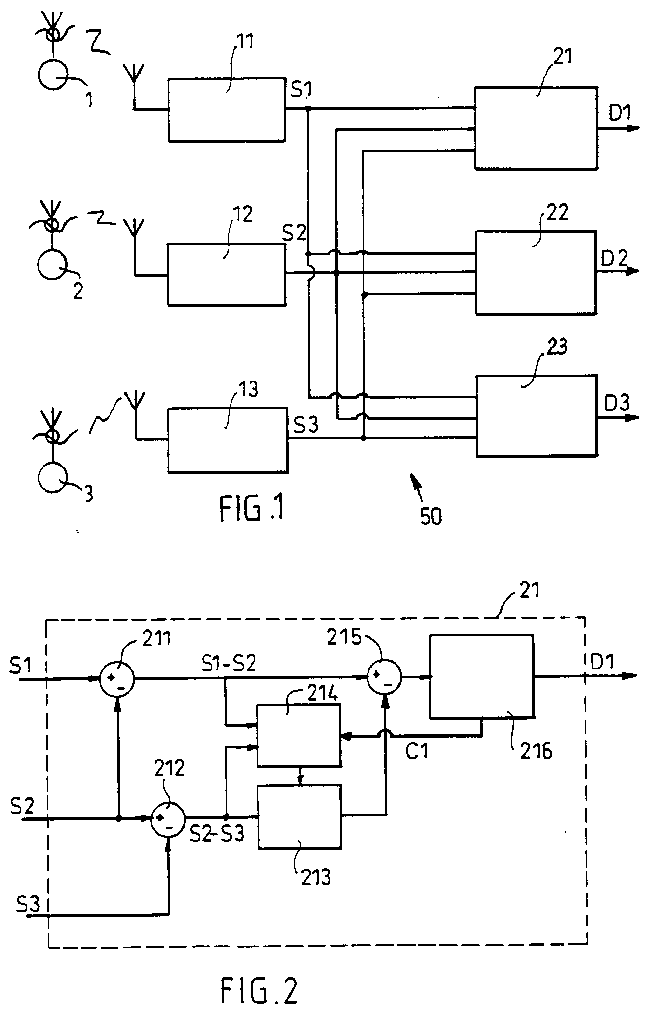

En se référant à la figure 1, un système de détection ici de sous-marins comprend une pluralité de bouées magnétométriques 1, 2 et 3 et un dispositif centralisé 50 qui reçoit les signaux captés par les bouées 1, 2 et 3, signaux transmis ici par voie hertzienne.

Comme cela a été signalé, le dispositif centralisé est disposé soit à bord d'un avion, soit à terre, soit à bord d'une bouée "maîtresse" non représentée, les bouées 1, 2 et 3 étant alors des bouées "esclaves".

Le dispositif centralisé 50 comprend trois circuits 11, 12 et 13 de réception et de filtrage. Ces trois circuits sont identiques et chacun d'entre eux est associé à une des trois bouées. Le circuit 11, associé à la bouée 1, délivre un signal S1 qui représente le module du champ magnétique dans lequel se trouve la bouée 1. De même, le circuit 12 et le circuit 13 délivrent respectivement des signaux S2 et S3 représentant le module du champ magnétique dans lequel se trouvent les bouées 2 et 3, respectivement.

Le dispositif 50 comporte également trois circuits 21, 22, et 23 de réduction du bruit, délivrant respectivement des signaux D1, D2 et D3. Chacun des circuits 21, 22 et 23 et pourvu de trois entrées par l'intermédiaire desquelles il reçoit les signaux S1, S2 et S3.

Comme cela sera mieux compris dans la suite, le signal D1 est représentatif de la présence d'un sous-marin dans le voisinage de la bouée 1, tandis que les signaux D2 et D3 sont représentatifs de la présence d'un sous-marin dans le voisinage des bouées 2 et 3, respectivement.

En référence maintenant à la figure 2, le circuit 21 comprend un premier soustracteur 211 recevant sur son entrée + le signal S1 et sur son entrée - le signal S2. Le signal de sortie du premier soustracteur 211 représente donc la différence S1-S2. Le circuit 21 comprend un deuxième soustracteur 212 recevant ici sur son entrée + le signal S2 et sur son entrée - le signal S3. Le signal de sortie du deuxième soustracteur 212 représente donc la différence S2-S3, appliquée à l'entrée d'un filtre adaptatif 213, dont les coefficients sont commandés par un circuit de commande 214. Le circuit de commande 214 reçoit les signaux de sortie des premier 211 et deuxième 212 soustracteurs respectivement, ainsi qu'un signal C1 délivré par une sortie auxiliaire d'un circuit de détection 216.

Un troisième soustracteur 215 est pourvu d'une entrée + reliée à la sortie du premier soustracteur 211, d'une entrée - reliée à la sortie du filtre 213, et d'une sortie reliée à l'unique entrée dont est pourvu le circuit de détection 216.

Le circuit de détection 216 est pourvu d'une sortie principale délivrant le signal D1.

Les circuits 22 et 23, non représentés, sont de constitution identique à celle du circuit 21, mais les signaux S1, S2 et S3 qui leur sont appliqués subissent une permutation circulaire. C'est ainsi que les signaux S2, S3 et S1 remplacent respectivement, pour le circuit 22, les signaux S1, S2 et S3 du circuit 21. De même, les signaux S3, S1 et S2 remplacent respectivement, pour le circuit 23, les signaux S1, S2 et S3 du circuit 21.

Le système qui vient d'être décrit en référence aux figures 1 et 2 fonctionne comme suit.

Tant que le circuit 216 ne détecte pas la présence d'un sous-marin cible dans le voisinage de la bouée 1, il autorise, par l'intermédiaire du signal C1, le réglage des coefficients du filtre adaptatif 213 par le circuit de commande 214, de façon à minimiser la valeur du signal de sortie du troisième soustracteur 215.

Dès que le circuit 216 détecte la présence d'un sous-marin dans le voisinage de la bouée 1, il commande par l'intermédiaire du signal C1 et du circuit 214, le gel des valeurs des coefficients du filtre 213, de façon à ce que ces coefficients conservent la valeur qu'ils avaient juste avant la détection par le circuit 216.

Conformément à l'invention, et comme cela a été signalé, le bruit résiduel en sortie du troisième soustracteur 215 est alors particulièrement faible, du fait que ce troisième soustracteur reçoit sur son entrée + la différence S1-S2, et non le signal S1 lui-même, et sur son entrée - la différence S2-S3 après filtrage, et non le signal S2 après filtrage.

Il est à noter que le circuit 21 pourrait être modifié pour que le premier soustracteur 211 délivre un signal représentatif de la différence S1-S3 au lieu de la différence S1-S2.

Les signaux de la figure 2 peuvent être des signaux analogiques, mais le plus souvent, il s'agit de signaux numériques résultant de l'échantillonnage, à une période $T_e$ convenablement choisie, de signaux analogiques, la valeur de chaque échantillon ainsi obtenue étant convertie en une valeur numérique. Dans ce cas, et de façon connue chaque signal, S1 par exemple est représenté en fait par une suite d'échantillons numériques :

... $S1_n$, $S1_{n+1}$, $S1_{n+2}$, ...

représentant chacun la valeur, sous forme numérique, d'un signal analogique S1(t) à des instants de rang

..., n , n+1, n+2, ...

respectivement.

Cela n'a pas été représenté sur les figures dans un souci de simplicité.

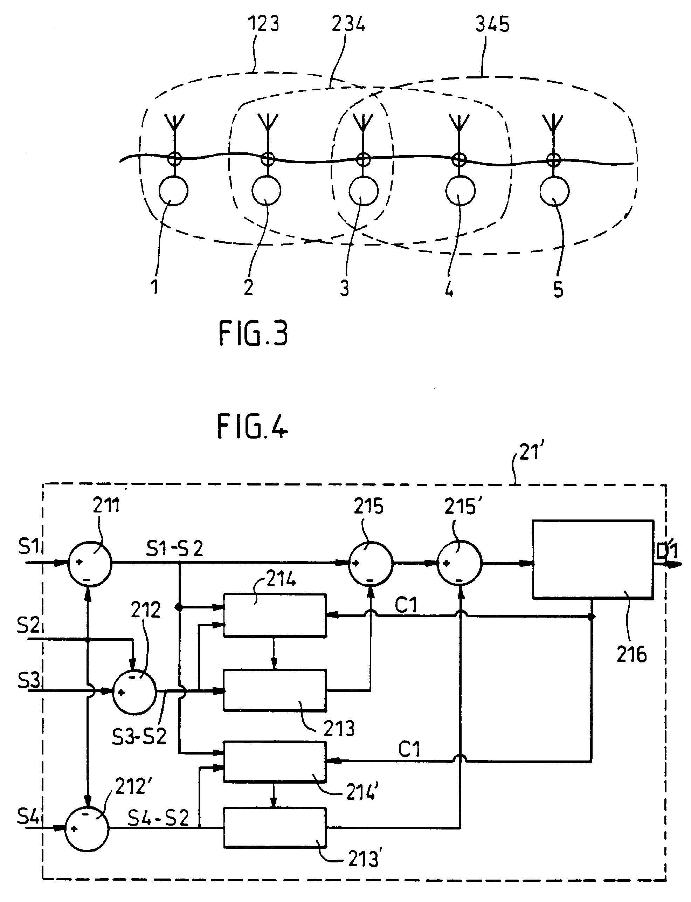

Sur la figure 3, on a représenté un ensemble de cinq bouées 1, 2, 3, 4, et 5, pour la surveillance d'une zone plus grande que celle du système de la figure 1 avec des bouées de même sensibilité. Dans ce cas, on peut former des paquets de trois bouées voisines les unes des autres, paquets qui seront traités chacun par un dispositif analogue au dispositif 50 de la figure 1. Un premier paquet 123 comporte ici les bouées 1, 2 et 3, un deuxième paquet 234 les bouées 2, 3 et 4 et un troisième paquet 345 les bouées 3, 4, et 5.

Cette décomposition en paquets de trois bouées n'est pas la seule manière de traiter le cas d'une pluralité de bouées en nombre supérieur à trois conformément à l'invention.

Sur la figure 4, on a représenté un circuit 21' qui est une variante du circuit 21 de la figure 2, modifié pour prendre en compte quatre signaux S1, S2, S3 et S4 provenant de quatre bouées différentes. On retrouve sur la figure 4 un premier soustracteur 211 dont la sortie représente la différence S1-S2, et un deuxième soustracteur 212 dont la sortie représente ici la différence S3-S2. Cette différence est appliquée à l'entrée d'un filtre adaptatif 213, dont la sortie est appliquée à l'entrée - d'un troisième soustracteur 215. L'entrée + du troisième soustracteur 215 reçoit le signal de sortie S1-S2 du premier soustracteur 211.

Un circuit de commande 214 commande les coefficients du filtre adaptatif 213 en réponse aux signaux de sortie des premier 211 et deuxième 212 soustracteurs respectivement, et à un signal C1 délivré par la sortie auxiliaire d'un circuit de détection 216.

Le circuit 21' se distingue essentiellement du circuit 21 en ce qu'il comprend également un quatrième soustracteur 212', un filtre adaptatif 213', un circuit de commande 214' et un cinquième soustracteur 215'.

La fonction du quatrième soustracteur 212' est analogue à celle du premier soustracteur 212, à ceci près qu'il reçoit les signaux S2 et S4 et délivre un signal de sortie représentant la différence S4-S2. Cette différence est appliquée à l'entrée du filtre adaptatif 213'. La sortie du filtre adaptatif 213' est appliquée à l'entrée - du cinquième soustracteur 215', dont l'entrée + reçoit le signal de sortie du troisième soustracteur 215 et dont la sortie est appliquée au circuit de détection 216.

Les coefficients du filtre adaptatif 213' sont commandés par le circuit de commande 214' en réponse aux signaux de sortie des premier 211 et quatrième 212' soustracteur 212', et au signal C1.

Le fonctionnement du circuit 21' est identique à celui du circuit 21, à ceci près qu'on retranche deux différences filtrées au lieu d'une au signal S1-S2 avant de l'appliquer à l'entrée du circuit de détection 216. On pourrait évidemment prévoir de tenir compte d'un cinquième signal S5, à partir duquel on déterminerait la différence S5-S2, par exemple, en vue de la retrancher, après passage dans un filtre adaptatif supplémentaire analogue aux filtres 213 et 213', au signal appliqué à l'entrée de détection. On peut ainsi prévoir de tenir compte d'autant de signaux analogues aux signaux S1, S2, S3, ... que l'on veut, en prévoyant une cascade de soustractions analogues aux soustracteurs 215 et 215'.

On peut donc dire que le procédé de l'invention revient à former des premières différences de signaux de sortie des bouées prises deux à deux, comme les différences S1-S2, S3-S2, S4-S2 de la figure 4, et à retrancher de chaque première différence, comme S1-S2, pour obtenir une deuxième différence comme celle appliquée à l'entrée du circuit de détection 216, au moins une autre première différence après l'avoir filtrée dans un filtre, comme le filtre 213, réglé pour minimiser la valeur de la deuxième différence en l'absence de cible.

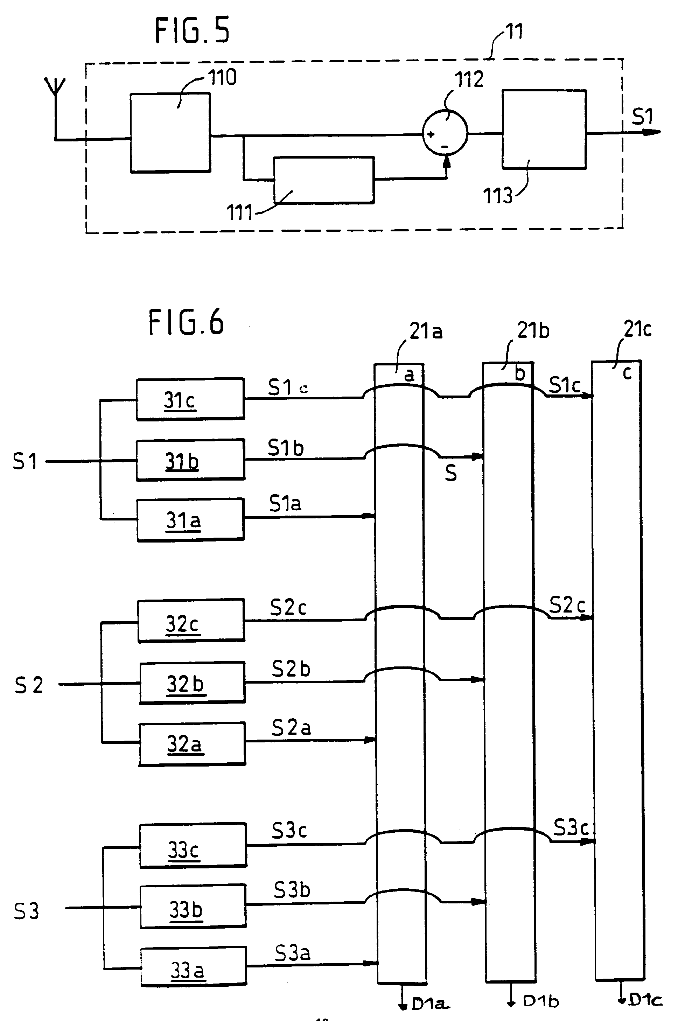

En se référant à la figure 5, le circuit 11 de réception et de filtrage est maintenant décrit. A la sortie de l'antenne qui capte le signal en provenance de la bouée 1 est disposé un circuit de réception 110, du type de celui décrit dans la demande française n. 88 02 218. De manière connue, il est en effet prévu, dans la bouée un codage et un traitement du signal à transmettre qui s'accommode notamment des interruptions de transmissions dues au masquage par les vagues. Le circuit de réception 110 décode et traite le signal qu'il reçoit en vue de son traitement ultérieur, notamment dans le circuit de réception 216. La sortie du circuit de réception 110 est ici reliée à l'entrée + d'un soustracteur 112, et à l'entrée d'un circuit 111 de calcul de moyenne glissante. L'entrée - du soustracteur 112 est reliée à la sortie du circuit 111, et sa sortie à l'entrée d'un filtre passe-bas 113 de type Butterworth ou de type elliptique. La sortie du filtre 113 délivre le signal S1.

Le circuit 111 et le soustracteur 112 forment ici un filtre passe-haut dont la fonction est d'éliminer les variations lentes du signal délivré par chacune des bouées, variations lentes encore appelées "tendances" ou "trends" selon la terminologie anglo-saxonne.

A cet effet, le circuit 111 calcule une moyenne glissante ("mobile averaging") en utilisant N-1 échantillons de part et d'autre de l'instant d'observation, avec pondération des N-1 échantillons ainsi utilisés par une fenêtre du type connu de l'homme du métier sous le nom de fenêtre de Hanning.

Le circuit 111 se comporte ainsi comme un filtre passe-bas, l'ensemble du circuit 11 et du soustracteur 112 se comportant comme un filtre passe-haut.

La demanderesse a montré que, si l'on se donne la valeur de la fréquence de coupure $f_c$ du circuit 111, le nombre N qui définit la largeur de la fenêtre de Hanning doit être égal à

$$N = 0,66/T_e f_c \quad (1)$$

formule dans laquelle $T_e$ est la période d'échantillonnage.

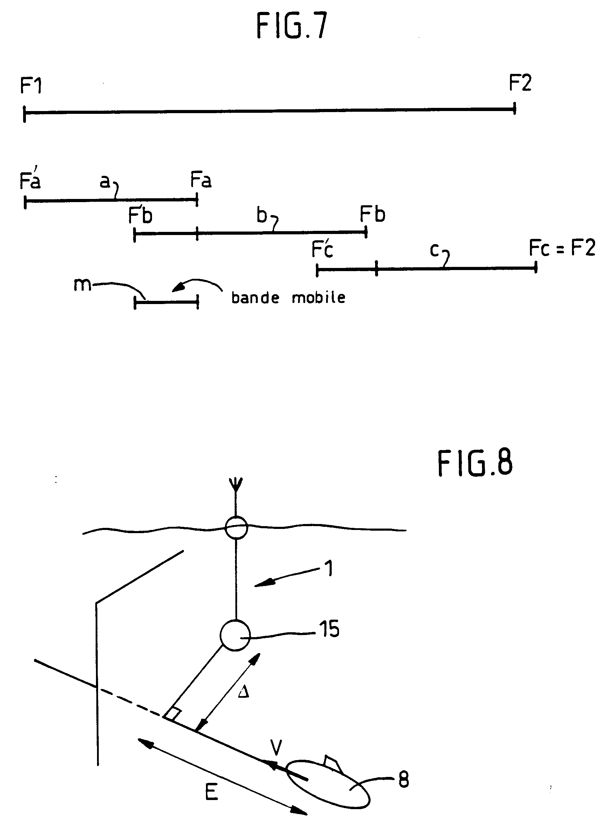

La fréquence $f_c$ est liée au rapport attendu V/D entre la vitesse V et la distance D des sous-marins cibles, telles que définies sur la figure 8. Sur cette figure, on a représenté un sous-marin 8 animé d'une vitesse V, qui passe au voisinage d'une bouée 1 en suivant une trajectoire supposée rectiligne. On appelle distance D de la cible la longueur du plus court chemin entre la trajectoire du sous-marin 8 et la partie sensible 15, contenant le magnétomètre, de la bouée 1. D n'est autre que la longueur de la projection de la partie sensible sur la trajectoire du sous-marin 8.

Dans la mesure où la demanderesse a montré que 95 % de l'énergie utile du signal de signature d'un éventuel sous-marin est comprise dans la bande de fréquence dont la limite basse est V/2 π D et la limite haute 3,5V/2 π D, la fréquence de coupure du filtre passe-haut constitué par le circuit 111 et le soustracteur 112 est choisie de l'ordre de V/2 π D, et la fréquence de coupure haute du filtre passe-bas 113 est choisie de l'ordre de 3,5V/2 π D.

Comme cela apparaît sur la figure 6, les signaux S1, S2 et S3, au lieu d'être appliqués directement au circuit 21 comme sur la figure 2, peuvent être filtrés pour être décomposés, ou découpés, chacun, en plusieurs voies fréquentielles, le circuit 21 étant lui-même décomposé en autant de circuits traitant chacun une voie fréquentielle.

C'est ainsi que le signal S1 est décomposé, à l'aide de trois filtres fréquentiels 31a, 31b et 31c en trois signaux S1a, S1b et S1c respectivement, chaque signal occupant une bande élémentaire de fréquences a, b et c respectivement.

De même, le signal S2 est décomposé, à l'aide de trois filtres fréquentiels 32a, 32b et 32c, en trois signaux S2a, S2b et S2c respectivement, chaque signal occupant la bande a, b et c respectivement.

Le signal S3 est également décomposé, à l'aide de trois filtres fréquentiels 32a, 32b et 32c en trois signaux S2a, S2b et S2c respectivement, chaque signal occupant la bande de fréquences a, b et c respectivement.

Un circuit 21a, comparable au circuit 21, traite les trois signaux S1a, S2a et S3a qui occupent la bande a. De même un circuit 21b traite les trois signaux S1b, S2b et S3b qui occupent la bande b, tandis qu'un circuit 21c traite les trois signaux S1c, S2c et S3c qui occupent la bande c.

Les circuits 21a, 21b et 21c délivrent des signaux D1a, D1b et D1c respectivement, correspondant à la détection d'un sous-marin cible dans la bande a, b et c, respectivement.

La figure 7 montre comment la bande de fréquence F1-F2, dans laquelle sont attendus les signaux S1, S2 et S3, est décomposée, ici, en trois bandes a, b, et c de fréquences de coupure basses $F'_a$, $F'_b$ et $F'_c$ et de fréquences de coupure hautes $F_a$, $F_b$ et $F_c$ respectivement.

Les trois bandes a, b et c sont prévues pour se chevaucher suffisamment de façon à ce qu'un sous-marin signe en totalité dans une bande ou dans une autre. Sur la figure 7, on note m la bande susceptible d'être occupée par le signal de signature d'un sous-marin. La bande m, évidemment inférieure à la bande F1-F2, est susceptible de se déplacer à l'intérieur de la bande F1-F2 selon les caractéristiques particulières du sous-marin qui engendre le signal de signature.

On a évidemment $F'_a$ = F1 et $F_c$ = F2.

Par contre, comme le montre la figure 7, on a :

$$F'_b < F_a \quad (3)$$
$$F'_c < F_b \quad (4)$$

avec :

$$F_a - F'_b > m \quad (5)$$
$$F_b - F'_c > m \quad (6)$$

de façon à ce que le chevauchement des bandes a, b et c soit toujours suffisant.

Par ailleurs, les fréquences $F'_a$, $F'_b$ et $F'_c$, ainsi que les fréquences $F_a$, $F_b$ et $F_c$ sont choisies pour que la dynamique de fréquence soit à peu près la même dans chacune des trois bandes a, b, et c. La dynamique de fréquence d'une bande est le rapport entre la fréquence maximale et la fréquence minimale de la bande.

L'intérêt du découpage en voies fréquentielles est qu'il permet, dans chaque bande a, b et c, d'effectuer un sous-échantillonnage en ne tenant pas compte de tous les échantillons, mais d'un échantillon sur n, par exemple.

Le sous-échantillonnage est ici prévu dans chacun des filtres 31a, 31b, 31c, 32a, 32b, 32c, 33a, 33b et 33c.

Les sous-échantillonnages sont prévus pour que, dans chaque bande a, b ou c, le théorème de Shannon se trouve respecté, et pour que dans chacune de ces bandes, le meilleur compromis se trouve respecté quand à la valeur de la fréquence d'échantillonnage résultant du sous-échantillonnage.

En effet, d'une part, il est avantageux d'avoir cette fréquence d'échantillonnage relativement faible, pour avoir notamment une bonne résolution spectrale, c'est-à-dire une résolution faible, ce qui est favorable à un éventuel traitement ultérieur par transformation de Fourier rapide ou par calcul de la densité spectrale de puissance. En effet, il est connu que la résolution spectrale est proportionnelle à la fréquence d'échantillonnage.

D'autre part, il est intéressant d'avoir la fréquence d'échantillonnage relativement élevée pour éviter les repliements de spectre dans les traitements ultérieurs, et un temps d'observation plus court, d'où une détection plus rapide des cibles proches, signant dans une bande de fréquences, plus haute.

Le découpage en voies fréquentielles permet, pour chaque voie, de mieux respecter le compromis entre une fréquence d'échantillonnage faible et une fréquence d'échantillonnage élevée. Il est d'autant plus facile à respecter que le nombre de voies fréquentielles est élevé.

Dans le circuit 216, pour la détection du sous-marin cible, on met en oeuvre le fait que la variation du champ magnétique résultant de la présence du sous-marin est décomposable en une somme pondérée de plusieurs fonctions de base liées à la géométrie du trajet suivi par le sous-marin relativement à la bouée. Les coefficients de pondération sont liés, notamment, au moment magnétique du sous-marin.

Comme on ne connaît pas, a priori, la trajectoire suivie par le sous-marin, on choisit arbitrairement une trajectoire, on projette le signal reçu sur un jeu de fonctions de base lié à cette trajectoire, et on calcule l'énergie projetée, comme somme des énergies de chacune des projections. Si l'énergie ainsi projetée dépasse un certain seuil bas, c'est que la trajectoire vraie du sous-marin coïncide avec la trajectoire arbitrairement choisie. Si l'énergie projetée reste inférieure au seuil, on essaie une autre trajectoire, et ainsi de suite pour un ensemble de trajectoires possibles, jusqu'à ce que l'énergie projetée dépasse le seuil bas, auquel cas on a détecté la présence du sous-marin.

La demanderesse a montré que la géométrie de la trajectoire n'intervient, pour le calcul de l'énergie projetée, que par le rapport V/D déjà défini en référence à la figure 8 et par la distance horizontale E entre le sous-marin 8 et le point où se projette la partie sensible 15 sur la trajectoire de celui-ci. Pour essayer diverses trajectoires, il suffit donc d'essayer diverses combinaisons de valeurs du couple E et V/D, selon un certain maillage, jusqu'à ce que l'énergie projetée dépasse le seuil.

Naturellement, le maillage ne doit pas être trop lâche, auquel cas on risque de ne pas voir un sous-marin dont le rapport V/D, par exemple, est situé au voisinage du milieu du segment qui joint les deux points du maillage en V/D les plus proches.

La demanderesse a montré qu'un maillage en V/D en progression géométrique de raison O,5, à partir de la valeur O,O5, donnait de bons résultats, ce qui donne pour V/D la suite de valeurs :

O,O5; O,O25; O,O125; O,OO625; O,OO3125

La demanderesse a également montré que, lorsqu'une valeur du rapport V/D est choisie, un bon choix pour la fenêtre temporelle de projection de signal reçu sur les fonctions de base était la fenêtre temporelle dont la borne inférieure est

- 3 D/V

et dont la borne supérieure est

+ 5 D/V.

Ceci permet de tenir compte de la déformation et du retard introduits par le filtre passe-haut 111 + 112 qui élimine les "tendances".

Il est à noter que, pour la détection d'un sous-marin cible, la connaissance précise de sa trajectoire, c'est-à-dire de V/D et E n'est pas importante, dans la mesure où ce que l'on souhaite déterminer, c'est la présence ou l'absence d'un sous-marin cible au voisinage d'une bouée donnée.

Dans la description qui précède, le système de détection de sous-marins comprend une pluralité d'au moins trois bouées. Il est évident cependant que l'invention s'applique à tout système comprenant une pluralité d'au moins trois capteurs élémentaires, capteurs élémentaires sensibles à la présence de la cible dans leurs voisinages respectifs et disséminés dans une zone à surveiller.

De même, dans un souci de clarté, les différentes fonctions du système ont été représentées sous forme de blocs. Il est clair cependant que plusieurs d'entre elles peuvent être mises en oeuvre dans un seul et même circuit, notamment en ce qui concerne les fonctions de calcul, implantées dans un calculateur ou processeur.

Enfin, le procédé de l'invention a été décrit en référence à la détection de sous-marins mais il s'applique tout aussi bien à la détection de toutes autres cibles, qu'il s'agisse de bâtiments de surface ou immergés.

**Revendications**

1. Procédé de réduction des effets des bruits parasites sur la détection d'une cible par un système comprenant une pluralité d'au moins trois capteurs élémentaires (1, 2, 3, 4) sensibles à la présence de la cible dans leurs voisinages respectifs et disséminés dans une zone à surveiller, procédé caractérisé par le fait qu'on forme (211, 212, 212') des premières différences (S1-S2, S3-S2, S4-S2) des signaux de sortie des capteurs élémentaires (1, 2, 3, 4) pris deux à deux, on retranche (215, 215') de chaque première différence pour obtenir une deuxième différence, au moins une autre première différence (S3-S2, S4-S2) après avoir filtrée celle-ci dans un filtre (213, 213') réglé pour minimiser la valeur de la deuxième différence en l'absence de cible, et on utilise (216) les deuxièmes différences ainsi obtenues pour la détection de la cible.

2. Procédé selon la revendication 1, dans lequel ledit filtre est un filtre adaptatif (213, 213') dont on commande (214, 214') les coefficients en réponse à la valeur de la deuxième différence établie à l'aide dudit filtre (213, 213'), et on gèle les valeurs desdits coefficients dès que l'on détecte (216) la présence d'une cible en réponse à cette deuxième différence.

3. Procédé selon des revendications 1 ou 2, dans lequel, lorsque la pluralité (1, 2, 3, 4, 5) de capteurs élémentaires comporte plus de trois capteurs, on forme des paquets (123, 234, 345) de trois capteurs élémentaires, voisins les uns des autres, pour chaque paquet, on forme trois premières différences, (S1 - S2) et on retranche de chacune (S1 - S2) des trois premières différences ainsi formées une autre (S2 - S3) des trois premières différences après avoir filtrée celle-ci dans un filtre (213) réglé pour minimiser la valeur de la deuxième différence correspondante.

4. Procédé selon l'une des revendications 1 à 3, dans lequel, pour éliminer les variations lentes du signal de sortie de chacun des capteurs élémentaires, on calcule (111) une moyenne glissante de ce signal, et on retranche (112) à ce signal la valeur de la moyenne glissante ainsi calculée.

5. Procédé selon l'une des revendications 1 à 4, dans lequel on décompose le signal de sortie (S1, S2, S3) de chacun des capteurs élémentaires, par filtrage fréquentiel (31a, 31b, 31c,..., 33c), en une pluralité de signaux élémentaires (S1a, S1b, S1c, ... S3c) occupant chacun une bande élémentaire (a, b, c) de fréquence inférieure à celle dudit signal de sortie (S1, S2, S3), on sous-échantillonne chacun des signaux élémentaires et on traite séparément (21a, 21b, 21c) les signaux élémentaires sous-échantillonnés occupant une même bande élémentaire (a, b, c) de fréquences.

6. Procédé selon l'une des revendications 1 à 5, dans lequel, pour détecter (216) la cible à partir de chaque deuxième différence, on choisit un ensemble de trajectoire possibles pour la cible relativement au capteur élémentaire correspondant, on projette le signal reçu sur un jeu de fonctions de base lié à chacune de ces trajectoires, on calcule l'énergie projetée pour chacune de ces trajectoires, et on compare chacune de ces énergies projetées à un seuil bas.

7. Dispositif pour la mise en oeuvre du procédé selon l'une des revendications 1 à 6 de réduction des effets des bruits parasites sur la détection d'une cible par un système comprenant une pluralité d'au moins trois capteurs élémentaires (1, 2, 3, 4) sensibles à la présence de la cible dans leurs voisinages respectifs et disséminés dans une zone à surveiller, dispositif caractérisé par le fait qu'il comprend des moyens (211, 212, 212') pour former des premières différences (S1-S2, S3-S2, S4-S2) des signaux de sortie des capteurs élémentaires (1, 2, 3, 4) pris deux à deux, des moyens (215, 215') pour retrancher de chaque première différence (S1-S2), pour obtenir une deuxième différence, au moins une autre première différence (S3-S2, S4-S2) après filtrage de celle-ci dans un filtre (213, 213') réglé pour minimiser la valeur de la deuxième différence en l'absence de cible, et des moyens (216) de détection de la cible en réponse à ladite deuxième différence.

8. Dispositif selon la revendication 7, dans lequel ledit filtre est un filtre adaptatif (213, 213') et il est prévu des moyens de commande (214, 214') des coefficients dudit filtre en réponse à la valeur de la deuxième différence établie à l'aide dudit filtre (213, 213') et des moyens (216, 214) pour geler les valeurs desdits coefficients en cas de détection de la présence d'une cible en réponse à cette deuxième différence.

9. Dispositif selon l'une des revendications 7 ou 8, dans lequel il est prévu, pour élminer les variations lentes du signal de sortie de chacun des capteurs élémentaires, des moyens (111) de calcul d'une moyenne glissante de ce signal, et des moyens (112) pour retrancher à ce signal la valeur de la moyenne glissante ainsi calculée.

10. Dispositif selon l'une des revendications 7 à 9, dans lequel il est prévu des filtres fréquentiels (31a, 31b, 31c, ..., 33c) pour décomposer le signal de sortie (S1, S2, S3) de chacun des capteurs élémentaires en une pluralité de signaux élémentaires (S1a, S1b, S1c, ... S3c) occupant chacun une bande élémentaire (a, b, c) de fréquence inférieure à celle dudit signal de sortie (S1, S2, S3), des moyens (31a, 31b, 31c, ...33c) pour sous-échantillonner chacun des signaux élémentaires, et des moyens (21a, 21b, 21c) pour traiter séparément les signaux élémentaires sous-échantillonnés occupant une même bande élémentaire (a, b, c) de fréquences.

**Patentansprüche**

1. Verfahren zur Verminderung der Auswirkungen der Nebengeräusche auf die Erfassung eines Ziels mittels eines Systems, das eine Mehrzahl von mindestens drei Elementaraufnehmern (1, 2, 3, 4) umfaßt, die empfindlich sind für die Anwesenheit des Ziels in ihrer jeweiligen Umgebung und in einer zu überwachenden Zone verstreut sind, ein Verfahren, dadurch gekennzeichnet, daß man erste Differenzen (S1-S2, S3-S2, S4-S2) der Ausgangssignale der Elementaraufnehmer (1, 2, 3, 4), jeweils paarweise genommen, bildet (211, 212, 212'), man von jeder ersten Differenz, um eine zweite Differenz zu erhalten, mindestens eine andere erste Differenz (S3-S2, S4-S2) abzieht (215, 215'), nachdem man diese in einem Filter (213, 213') gefiltert hat, der so geregelt wird, daß der Wert der zweiten Differenz in Abwesenheit des Ziels minimiert wird, und man die so erhaltenen zweiten Differenzen für die Erfassung des Ziels verwendet (216).

2. Verfahren nach Anspruch 1, bei dem das Filter ein anpassungsfähiges Filter (213, 213') ist, dessen Faktoren in Abhängigkeit von dem Wert der mit Hilfe dieses Filters (213, 213') erstellten zweiten Differenz gesteuert werden (214, 214'), und man die Werte dieser Faktoren einfriert, sobald man die Anwesenheit eines Ziels in Abhängigkeit von dieser zweiten Differenz feststellt (216).

3. Verfahren nach Anspruch 1 oder 2, bei dem man, wenn die Mehrzahl (1, 2, 3, 4, 5) von Elementaraufnehmern mehr als drei Aufnehmer umfaßt, Pakete (123, 234, 345) von jeweils drei einander benachbarten Elementaraufnehmern bildet, und man für jedes Paket drei erste Differenzen (S1 - S2) bildet und man von jeder (S1 - S2) der so gebildeten drei ersten Differenzen eine andere (S2 - S3) der drei ersten Differenzen abzieht, nachdem man diese in einem Filter (213) gefiltert hat, der so geregelt wird, daß der Wert der entsprechenden zweiten Differenz minimiert wird.

4. Verfahren nach einem der Ansprüche 1 bis 3, bei dem man, um die langsamen Änderungen des Ausgangssignals jedes Elementaraufnehmers zu eliminieren, einen gleitenden Mittelwert dieses Signals berechnet (111) und man von diesem Signal den so berechneten gleitenden Mittelwert abzieht (112).

5. Verfahren nach einem der Ansprüche 1 bis 4, bei dem man das Ausgangssignal (S1, S2, S3) jedes Elementaraufnehmers durch Frequenzsiebung (31a, 31b, 31c, ... , 33c) in eine Mehrzahl von Elementarsignalen (S1a, S1b, S1c, ... S3c) zerlegt, die jeweils ein Elementar-Frequenzband (a, b, c) belegen, welches kleiner ist als dasjenige des Ausgangssignals (S1, S2, S3), man jedes der Elementarsignale einer Teilabtastung unterzieht, und man die teilabgetasteten Elementarsignale, welche ein gleiches Elementar-Frequenzband (a, b, c) belegen, gesondert verarbeitet (21a, 21b, 21c).

6. Verfahren nach einem der Ansprüche 1 bis 5, bei dem man, um das Ziel anhand jeder zweiten Differenz zu erfassen (216), eine Gruppe von Bahnen wählt, die für das Ziel im Verhältnis zu dem entsprechenden Elementaraufnehmer möglich sind, man das empfangene Signal auf einen zu jeder dieser Bahnen gehörenden Satz von Grundfunktionen projiziert, man für jede dieser Bahnen die projizierte Energie berechnet, und man jede dieser projizierten Energien mit einem unteren Schwellenwert vergleicht.

7. Vorrichtung zur Durchführung des Verfahrens nach einem der Ansprüche 1 bis 6 zur Verminderung der Auswirkungen der Nebengeräusche auf die Erfassung eines Ziels mittels eines Systems, das eine Mehrzahl von mindestens drei Elementaraufnehmern (1, 2, 3, 4) umfaßt, die empfindlich sind für die Anwesenheit des Ziels in ihrer jeweiligen Umgebung und in einer zu überwachenden Zone verstreut sind, eine Vorrichtung, dadurch gekennzeichnet, daß sie Mittel (211, 212, 212'), um erste Differenzen (S1-S2, S3-S2, S4-S2) der Ausgangssignale der Elementaraufnehmer (1, 2, 3, 4), jeweils paarweise genommen, zu bilden, Mittel (215, 215'), um von jeder ersten Differenz (S1-S2) zwecks Erhalt einer zweiten Differenz mindestens eine andere erste Differenz (S3-S2, S4-S2) abzuziehen, nachdem diese in einem Filter (213, 213') gefiltert worden ist, der so geregelt wird, daß der Wert der zweiten Differenz in Abwesenheit des Ziels minimiert wird, und Mittel (216) zur Erfassung des Ziels in Abhängigkeit von der zweiten Differenz umfaßt.

8. Verfahren nach Anspruch 7, bei dem das Filter ein anpassungsfähiges Filter (213, 213') ist und mit Mitteln zur Steuerung (214, 214') der Faktoren dieses Filters in Abhängigkeit von dem Wert der mit Hilfe dieses Filters (213, 213') erstellten zweiten Differenz und mit Mitteln (216, 214) zum Einfrieren der Werte dieser Faktoren im Falle der Feststellung der Anwesenheit eines Ziels in Abhängigkeit von dieser zweiten Differenz versehen ist.

9. Verfahren nach einem der Ansprüche 7 oder 8, bei dem, um die langsamen Änderungen des Ausgangssignals jedes Elementaraufnehmers zu eliminieren, Mittel (111) zur Berechnung eines gleitenden Mittelwerts dieses Signals und Mittel (112) zum Abziehen des so berechneten gleitenden Mittelwerts von diesem Signal vorgesehen sind.

10. Verfahren nach einem der Ansprüche 7 bis 9, bei dem Frequenzfilter (31a, 31b, 31c, ... , 33c) zur Zerlegung des Ausgangssignals (S1, S2, S3) jedes Elementaraufnehmers in eine Mehrzahl von Elementarsignalen (S1a, S1b, S1c, ... S3c), die jeweils ein Elementar-Frequenzband (a, b, c) belegen, welches kleiner ist als dasjenige des Ausgangssignals (S1, S2, S3), Mittel (31a, 31b, 31c, ... 33c) zur Teilabtastung jedes der Elementarsignale und Mittel (21a, 21b, 21c) zur gesonderten Verarbeitung der teilabgetasteten Elementarsignale, welche ein gleiches Elementar-Frequenzband (a, b, c) belegen, vorgesehen sind.

**Claims**

1. A process for reducing the effects of disturbance on the detection of a target by a system comprising a plurality of at least three elementary sensors (1, 2, 3, 4) sensitive to the presence of the target in their respective proximity and disseminated in a zone to be monitored, the process being characterised in that first differences (S1-S2, S3-S2, S4-S2) are formed (211, 212, 212') from the output signals of the elementary sensors (1, 2, 3, 4) taken two by two, from each first difference at least one other first difference (S3-S2, S4-S2) is subtracted (215, 215') in order to obtain a second difference, after this other first difference has been filtered in a filter (213, 213') adjusted to minimise the value of the second difference in the absence of a target, and the second differences thus obtained are used (216) for the detection of the target.

2. A process according to claim 1, in which the said filter is an adaptive filter (213, 213') of which the coefficients are controlled (214, 214') in response to the value of the second difference established with the aid of the said filter (213, 213'), and the values of the said coefficients are frozen when the presence of a target is detected (216) in response to this second difference.

3. A process according to claim 1 or 2, in which, when the plurality (1, 2, 3, 4, 5) of elementary sensors comprises more than three sensors, packets (123, 234, 345) of three elementary sensors are formed adjacent to each other, for each packet, three first differences (S1-S2) are formed and from each (S1-S2) of the three first differences thus formed, another (S2-S3) of the three first differences is subtracted after this other first difference has been filtered in a filter (213) adjusted to minimise the value of the corresponding second difference.

4. A process according to one of claims 1 to 3, in which, in order to eliminate the slow variations of the output signal of each of the elementary sensors, a sliding average of this signal is calculated (111), and the value of the sliding average thus calculated is subtracted (112) from this signal.

5. A process according to one of claims 1 to 4, in which the output signal (S1, S2, S3) of each of the elementary sensors is broken down by frequency filtering (31a, 31b, 31c,... 33c) into a plurality of elementary signals (S1a, S1b, S1c,...S3c) each occupying an elementary frequency band (a, b, c) lower than that of the said output signal (S1, S2, S3), each of the elementary signals is replicate sampled and the replicate-sampled elementary signals occupying the same elementary frequency band (a, b, c) are processed separately (21a, 21b, 21c).

6. A process according to one of claims 1 to 5, in which in order to detect (216) the target from each second difference, a group of possible trajectories for the target relative to the corresponding elementary sensor is chosen, the signal received is projected onto a group of basic functions linked to each of these trajectories, the energy projected is calculated for each of these trajectories and each of the projected energies is compared with a low threshold.

7. A device for carrying out the process according to one of claims 1 to 6, for reducing the effects of disturbance on the detection of a target by a system comprising a plurality of at least three elementary sensors (1, 2, 3, 4) sensitive to the presence of the target in their respective proximity and disseminated in a zone to be monitored, the device being characterised in that it comprises means (211, 212, 212') for forming first differences (S1-S2, S3-S2, S4-S2) of the output signals of the elementary sensors (1, 2, 3, 4) taken two by two, means (215, 215') for subtracting from each first difference (S1-S2) at least one other first difference (S3-S2, S4-S2) in order to obtain a second difference, after filtering this other first difference in a filter (213, 213') adjusted to minimise the value of the second difference in the absence of a target, and means (216) for detecting the target in response to the said second difference.

8. A device according to claim 7, in which the said filter is an adaptive filter (213, 213') and there are provided control means (214, 214') for the coefficients of the said filter in response to the value of the second difference established with the aid of the said filter (213, 213'), and means (216, 214) for freezing the values of the said coefficients in the case of the detection of the presence of a target in response to this second difference.

9. A device according to one of claims 7 or 8, in which there are provided, in order to eliminate the slow variations of the output signal of each of the elementary sensors, means (111) for calculating a sliding average of this signal, and means (112) for subtracting from this signal the value of the sliding average thus calculated.

10. A device according to one of claims 7 to 9, in which there are provided frequency filters (31a, 31b, 31c, ..., 33c) for breaking up the output signal (S1, S2, S3) of each of the elementary sensors into a plurality of elementary signals (S1a, S1b, S1c, ... S3c) each occupying an elementary frequency band (a, b, c) lower than that of the output signal (S1, S2, S3), means (31a, 31b, 31c, ... 33c) for replicate sampling each of the elementary signals, and means (21a, 21b, 21c) for separately processing the replicate-sampled elementary signals occupying the same elementary frequency band (a, b, c).

FIG.1

FIG.2

11

FIG.3

FIG.4

EP 0 497 665 B1

FIG.5

FIG.6

13

# FIG.7

F1            F2

Fa'    a    Fa

Fb'    b    Fb

Fc'    c    Fc = F2

m    bande mobile

# FIG.8

1

15

Δ

V

E

8